# EUROPÄISCHE PATENTSCHRIFT

(11) **EP 3 622 692 B1**
(45) Veröffentlichungstag und Bekanntmachung des Hinweises auf die Patenterteilung: **11.06.2025**
(21) Anmeldenummer: 17742184.9
(22) Anmeldetag: 06.07.2017
(51) Int. Cl.: H04L 67/12

(54) **VERFAHREN ZUR PERFORMANTEN DATENÜBERTRAGUNG IN EINEM DATENNETZ MIT TEILWEISE ECHTZEIT-ANFORDERUNGEN UND SYSTEM ZUR DURCHFÜHRUNG DES VERFAHRENS**
METHOD FOR HIGH-PERFORMANCE DATA TRANSFER IN A DATA NETWORK WITH, IN PART, REAL-TIME REQUIREMENTS AND SYSTEM FOR CARRYING OUT THE METHOD
PROCÉDÉ DE TRANSMISSION PERFORMANTE DE DONNÉES DANS UN RÉSEAU DE DONNÉES, À CONDITIONS EN PARTIE EN TEMPS RÉEL, ET SYSTÈME DE MISE EN OEUVRE DUDIT PROCÉDÉ

(43) Veröffentlichungstag der Anmeldung: 18.03.2020
(73) Patentinhaber: Siemens Aktiengesellschaft, 80333 München (DE)
(72) Erfinder: CHEN, Feng, 90537 Feucht (DE); GÖTZ, Franz-Josef, 91180 Heideck (DE); KIESSLING, Marcel, 91235 Velden (DE); NGUYEN, An Ninh, 90427 Nürnberg (DE); SCHMITT, Jürgen, 90766 Fürth (DE)
(74) Vertreter: Siemens Patent Attorneys
(86) Internationale Anmeldenummer: PCT/EP2017/066989
(87) Internationale Veröffentlichungsnummer: WO 2019/007516

(56) Entgegenhaltungen:
- SCHLESINGER RALF ET AL: "Automatic Packing Mechanism for Simplification of the Scheduling in Profinet IRT", IEEE TRANSACTIONS ON INDUSTRIAL INFORMATICS, IEEE SERVICE CENTER, NEW YORK, NY, US, vol. 12, no. 5, 1 October 2016 (2016-10-01), pages 1822 - 1831, XP011634246, ISSN: 1551-3203, [retrieved on 20161111], DOI: 10.1109/TII.2015.2509450
- CENA G ET AL: "Performance analysis of Ethernet Powerlink networks for distributed control and automation systems", COMPUTER STANDARDS AND INTERFACES, ELSEVIER SEQUOIA. LAUSANNE, CH, vol. 31, no. 3, 1 March 2009 (2009-03-01), pages 566 - 572, XP025909599, ISSN: 0920-5489, [retrieved on 20080409], DOI: 10.1016/J.CSI.2008.03.022
- FRANK DÜRR ET AL: "No-wait Packet Scheduling for IEEE Time-sensitive Networks (TSN)", REAL-TIME NETWORKS AND SYSTEMS, ACM, 2 PENN PLAZA, SUITE 701 NEW YORK NY 10121-0701 USA, 19 October 2016 (2016-10-19), pages 203 - 212, XP058300496, ISBN: 978-1-4503-4787-7, DOI: 10.1145/2997465.2997494
- MICHAEL D. TEENER: "IEEE 802 Time-Sensitive Networking: Extending Beyond AVB", 30 September 2013 (2013-09-30), pages 1 - 30, XP055228186, Retrieved from the Internet <URL:https://standards.ieee.org/events/automotive/08_Teener_TSN.pdf> [retrieved on 20151112]

## Beschreibung

Industrielle Anwendungen, so wie verteilt laufende IO-Systeme in der industriellen Automatisierung, sind abhängig von der Verfügbarkeit und Zuverlässigkeit eines deterministischen Datentransports. Das bedeutet, dass die zu übertragenden Daten möglichst in Echtzeit, zuverlässig und mit geringer Latenz dem Empfänger zugestellt werden. Dabei zeichnet sich die Datenübertragung in diesen Netzen unter anderem dadurch aus, dass hier kleinere, vorhersehbare Datenmengen in regelmäßigen Abständen vorplanbar übertragen werden, beispielsweise Messwerte von Sensoren oder Steuerbefehle an Aktoren in der industriellen Anlage. Die Datenmengen sind meist in einem Burst, oder auch Stream genannt, also eine Menge von mehreren Datenframes zusammengefasst.

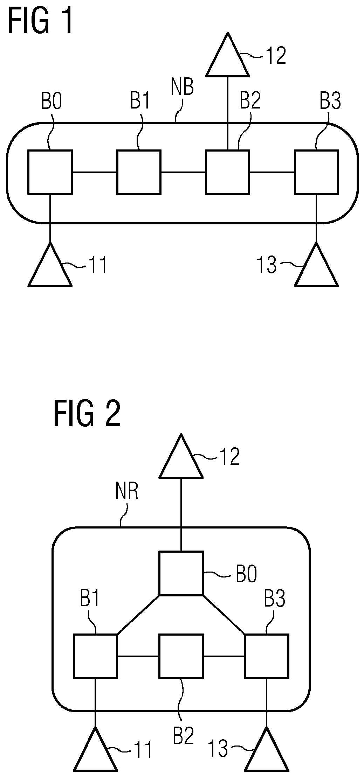

In der Vergangenheit wurde speziell für diesen Zweck und für den Einsatz im industriellen Umfeld entwickelte Hardware verwendet, um industrielle Netze aufzubauen, bevorzugt in BUS Topologie, d. h. alle Teilnehmer sind verbunden durch einen gemeinsamen Nachrichtenweg. Ein solches BUS System ist beispielhaft in der Figur 1 dargestellt, wobei über die Übertragungsstrecke NB, enthaltend die Netzelemente B0 ... B3 diverse Teilnehmer 11, 12 ,13 angeschlossen sind, welche miteinander kommunizieren können.

Das BUS System ist aber nicht ausschließlich verwendet, eine alternative Topologie ist beispielsweise der Ring NR, so wie in der Figur 2 dargestellt, hier sind die Netzelemente B0 ... B3 in einer Ringstruktur miteinander verbunden, was bei der Übertragung von Datenpaketen zwischen den angeschlossenen Teilnehmer 11, 12 ,13 zwei Übertragungsrichtungen zulässt.

Gegenwärtig wird die standardisierte Ethernet Technologie in fast allen modernen Netzen für den Datentransport verwendet.

Die Hersteller von industriellen Automatisierungsanlagen entwickeln daher Lösungen basierend auf Ethernet, mit dedizierten Hardware-Erweiterungen um den Anforderungen der Applikationen gerecht zu werden, und garantieren das gewünschte Echtzeit-Verhalten des Netzwerks.

Eines dieses so ausgelegten Systems ist PROFINET, kurz für Process Field Network. Profinet nutzt TCP/IP und IT-Standards, ist Echtzeit-Ethernet-fähig und ermöglicht die Integration von Feldbus-Systemen. PROFINET selber definiert zwei Echtzeit-Protokolle: RT (Real Time) und IRT (Isochronous Real-Time) um zeitkritische Daten für die Profinet IO-Anwendungen mit verschiedenen Echtzeit-Anforderungen zu übertragen.

Profinet RT läuft auf Standard Ethernet Hardware und behandelt die Profinet IO Anwendungen mit Zykluszeilen bis zu 10 ms. Auf der Data Plane Ebene benutzt es Prioritäten der Standard-Ethernet-Vermittlungstechnologie um Echtzeit-Daten mit einer höheren Priorität zu übertragen als die normalen Daten, die nicht in Echtzeit übermittelt werden müssen. Der Vorteil von Profinet-RT besteht darin, dass das Betreiben keine Zeitsynchronisation der Netzelemente erfordert und daher mit geringem Engineering-Aufwand auskommt.

Allerdings bietet die ausschließliche Verwendung von Profinet RT nur ein geringes Echtzeit-Verhalten, weil auch die Übertragung eines Datenpakets mit hoher Priorität einen Übertragungs-Delay von bis zu einem maximal großen Daten-Frame pro Sprung von einem Netzelement zum nächsten hat.

Für IO-Anwendungen mit schnellen Kontroll-Schleifen wie bei der Motion Control in einem Antriebssystem bietet Profinet IRT einen hohen Grad an Determinismus und kann Zykluszeiten unter 1 ms, bis zu 31,25 µs, anbieten.

Profinet IRT verwendet Zeit-Synchronisation mit einem Jitter, (also einem zeitliche Taktzittern bei der Übertragung von Digitalsignalen) von weniger als 1 µs, eine Übertragung mit Zeitplanung (time-scheduled , ähnlich TDMA, Time Division Multiple Access) und sogenannte "Cut-Through"-Vermittlung, d. h. die Vermittlungsstation leitet den zu übertragenden Datenframe bereits weiter bevor er vollständig von der vorhergehenden Vermittlungsstation empfangen wurde.

Diese beiden Übertragungsverfahren benötigen, wie bereits erläutert, konkrete Hardware, die geeignet ist für den Einsatz in einem industriellen Ethernet.

Aus der Druckschrift "Automatic Packing Mechanism for Simplification of the Scheduling in Profinet IRT" von Ralf Schlesinger et al, IEEE Transactions on Industrial Informatics, Bd. 12, Nr. 5, ISSN 1551-330, ist bereits ein verbessertes Verfahren für Profinet IRT bekannt, welches eine Synchronisierung des Sendens von Frames aufweist. Die SubFrames werden in einen Carrier-Frame gepackt, welcher eine vordefinierte Dauer des Sendezeitfensters hat.

Cena G. et al beschreibt in "Performance analysis of Ethernet Powerlink networks for distributed control and automation systems", Computer Standards & Interfaces, Bd. 31, Nr. 3, ISSN 0920-5489 eine Lösung für industrielle Kommunikation basierend auf dem Ethernet Powerlink Standard, und insbesondere die Übertragung von azyklischen Echtzeitdaten.

No-wait Packet Scheduling for IEEE Time-sensitive Networks (TSN), von Frank Dürr et al. in Real-Time Networks and Systems, ISBN 978-1-4503-4787-7 beschreibt eine Übertragung von Datenpaketen basierend auf Ethernet, wobei die Vermittlungsknoten zeitsynchronisiert sind bei der Weiterleitung der Datenpakete.

Das Prinzip von IRT sieht vor, den IRT Daten-Transfer (die Übertragung von IRT Daten) vor Störungen durch anderen Daten-Transfer (RT und weitere, nicht-RT-Daten) zu schützen. Dies geschieht durch Verwendung von zweckbestimmten Zeit-Fenstern (Reservierte Bandbreiten für die "Red Phase", "Green Phase" und "Yellow Phase" von Profinet IRT) und minimalisieren den Zeitverzug (Delay) der IRT Daten-Frames an den Bridges (Vermittlungsstellen) durch die Verwendung der oben beschriebenen Cut-Through-Vermittlung.

Die "Red Phase" ist dabei streng reserviert für PROFINET RT Klasse 3, das die höchste Priorität hat, d. h. in dieser Zeit dürfen keine anderen Datenpakete übertragen werden.

Um diese Anforderungen zu realisieren benötigt man ein Offline-Engineering-Tool um die Übertragungszeit jedes IRT Daten-Frames an der Quelle zu berechnen (auch "Injection Time", Einspeisung) und den IRT-Zeitplan (Schedule) an jeder Bridge. Um zu garantieren, dass alle IRT Frames an jeder Etappe mittels Cut-Through-Vermittlung weitergeleitet werden, ohne einander zu behindern muss das IRT Scheduling Tool mit dem maximalen Synchronisationsfehler planen und rechnet eine ausreichend große Zeitlücke als Sicherheitspuffer für den jeweiligen Einspeisungszeitpunkt (Injection Time) zwischen zwei beliebigen Daten-Frames, die durch zwei verschiedene Datenquellen erzeugt/gesendet wurden und die sukzessive vom selben Ausgangsport (Egress-Port) einer Vermittlungsstelle (Bridge) entlang einem Übertragungspfad weiter geleitet werden sollen. Der Vorgang des Weiterleitens selbst ist hochgradig abhängig von der zugrundeliegenden Hardware-Implementierung. Der Zeitplan/Schedule berücksichtigt alle HW-Einflüsse und ist daher nur in der bekannten Topologie anwendbar, mit HW-Geräten die in der Planung berücksichtigt wurden. Solche Konflikte würden zu Datenverlust führen, weil ein Zwischenspeichern / Queueing üblicherweise von der Cut-Through Vermittlung nicht angeboten und der Datenframe verworfen wird.

Im Folgenden wird auch von Systemauslegung gesprochen. Darunter wird verstanden, dass man eine vorbekannte Menge von Daten-Frames in einem Netzwerk garantiert übertragen können muss, also ohne Datenverlust und innerhalb einer garantierten Übertragungszeit, unabhängig von der zugrundeliegenden Topologie. Dafür wird die maximale Anzahl an RT Daten-Frames bestimmt, die garantiert im Netz ohne Datenverlust übertragen werden kann, bei bekannter maximaler Anzahl von Hops im Netz und maximaler Paketlänge der RT Frames (bei TSN auch Streams genannt) und einer bekannten Latenz (Verzögerungszeit) an den Vermittlungsstellen.

An den Protokollen für Ethernet wird konstant weiter entwickelt. Die AVB (Audio Video Bridging) Working Group der IEEE hat eine Menge von Features für die zuverlässige Übertragung von Audio- und Video-Daten innerhalb einer maximaler Latenz-Zeit definiert.

Eine neue Art von Datenverkehr, der sog. "Reserved Traffic" wird eingeführt. Audio- und Video-Daten, die periodisch auftreten werden in sog. "Streams" übertragen. Die Informationen zur Netz-Konfiguration wird vor dem Nutzer verborgen durch das Stream Reservation Protocol (SRP, IEEE 802.1Qat). Es bietet einen Mechanismus für Zugriffskontrolle implementiert in Kombination mit Reservierung von Ressourcen, so kann eine Ende-zu-Ende Latenzzeit garantiert werden für diesen periodisch auftretenden Datenverkehr (Stream).

Weiterhin hat TSN als neues Weiterleitungsverhalten den TAS (Time-Aware-Shaper, IEEE 802.1 QBR) Mechanismus eingeführt, um die niedrigste mögliche Latenzzeit zu erreichen.

Die Weiterleitung wird durch einen - dem IRT ähnlichen - Zeitplan/Schedule gelöst und ermöglicht die Entwicklung von Echtzeit-Systemen mit der niedrigsten Latenzzeit für jeden Daten-Frame.

Zusammenfassend kann man sagen, dass derzeit fast alle Hersteller von industriellen Echtzeit-Systemen speziell für diesen Zweck entwickelte Hardware verwenden, um hochperformante Systeme zu erhalten. Diese weisen allerdings eine geringe Flexibilität bezüglich einer Änderung des Anwendungsszenarios auf. Alternativ dazu wird standardisierte Hardware verwendet, welche bei flexibleren Anwendungsmöglichkeiten eine schlechtere Performanz aufweist.

PROFINET definiert, wie oben bereits beschrieben, RT (Real-Time) und IRT (Isochromos Real-Time) für die Profinet IO Anwendungen mit unterschiedlichen Echtzeit-Anforderungen.

Profinet RT wird auf standardisierter Hardware ausgeführt und ist nicht abhängig von Zeit-Synchronisations-Mechanismen. Es erfordert wenig vorab Engineering-Aufwand. Da das Konzept auf der Priorisierung von Datenpaketen basiert bietet es nur beschränkt Echtzeit-Möglichkeiten.

Profinet IRT benötigt eine spezielle Hardware, um einen hohen Grad an Determinismus anzubieten, basierend auf Vorab-Offline Engineering und Planung. Das Scheduling-Konzept ist weniger flexibel und muss aus Stabilitäts-Gründen Sicherheits-Puffer anbieten.

AVB führt ein hochflexibles System ein, das ein einfaches Protokoll für die Endstationen anbietet, um deren Bedürfnisse der industriellen Anwendungen nach Flexibilität zu erfüllen.

Die Performanz oder Leistungsfähigkeit eines AVB Netzwerks ist ausreichend, um die Anforderungen von Audio- und Video-Anwendungen zu erfüllen, aber die AVB Systeme sind nicht stark genug, um die Anforderungen an die Latenzzeiten der industriellen Anwendungen zu erfüllen.

TSN ist ein hoch-deterministisches System, das einen Mechanismus anbietet zur Konfiguration einer zeitbasierten Übertragung innerhalb der Vermittlungsstellen / Bridges. Das bietet dem Anbieter, einem TDMA-basierten System, die Berechnungsmethode und das Scheduling-Konzept für die benötigte Konfiguration dieser Systeme außerhalb der IEEE Standardisierungsaktivitäten.

Es ist Aufgabe der Erfindung ein verbessertes Verfahren und eine Vorrichtung zur performanten Datenübertragung in einem industriellen Datennetz mit zumindest teilweise Echtzeit-Anforderungen anzugeben, welches mit Standard-Ethernet-Vermittlungselementen für das Kommunikationsnetz realisiert werden kann.

Diese Aufgabe wird gelöst durch ein Verfahren zur Vermittlung von Echtzeitdaten mit den Merkmalen gemäß dem Patentanspruch 1.

Die Aufgabe wird ebenfalls gelöst durch ein System mit den Merkmalen gemäß dem Patentanspruch 9.

Die Vorrichtung, insbesondere der Vermittlungsknoten ist geeignet und aus zum bevorzugten, performanten Übertragen einer Menge von Datenpaketen auf dem Weg von einem Datensender zu einem Datenempfänger von dem Vermittlungsknoten über einen Eingangsport empfangen und einen Ausgangsport zu einem zweiten Vermittlungsknoten übertragen wird, wobei jeweils ein Zeitfenster von der Übertragungsbandbreite exklusiv reserviert ist und der Beginn des Übertragungs-Zeitfensters bei allen übertragenden Vermittlungsknoten im Netzwerk zeitsynchronisiert ist, wobei vor einer neuen Reservierung geprüft wird, ob diese noch erlaubt ist.

Weitere vorteilhafte Ausgestaltungen der Erfindung sind in den Unteransprüchen beschrieben.

Das vorgeschlagene Verfahren und die Vorrichtung beschreiben einen Echtzeit-Netz-Plan für industrielle Steuer- und Kontroll-Anwendungen, bei wobei Standard-Ethernet-Vermittlungselemente für das Kommunikationsnetz verwendet werden, insbesondere basierend auf den neuen Mechanismen gemäß der IEEE 802.1 TSN Task Group. Der Ablaufplan kombiniert zeit-getaktete Datenübertragung mit dem Stream Reservierungskonzept und bietet so Determinismus mit garantierter maximaler Latenzzeit und Zugangskontrollen zur Laufzeit.

Die Bestimmung der oben erwähnten Systemauslegung kann wie unten beschrieben in den vier Schritten geschehen:
- es wird eine Worst-Case Topologie angenommen (beispielsweise ein Bus System mit maximaler Entfernung zwischen Sendern und Empfängern)
- die TAS Fensterlänge für den Zyklus wird festgelegt, z. B. 50% der Zeit für die geplante Echtzeitübertragung und 50% für sonstigen Daten-Traffic.
- Die verbleibende Burstlänge ergibt sich aus der Differenz der Fensterlänge minus Latenzanteil
- Die so errechnete Burstlänge ergibt dann die Anzahl der darüber in der Zeit möglichen übertragbaren RT Frames.

Solange die angenommenen Randbedingungen erfüllt sind, können an jeder Stelle im Netzwerk Teilnehmer mit RT Daten-Frames hinzugefügt und entfernt werden, ohne die garantierte Übertragung zu gefährden. Durch ein Reservierungsprotokoll werden die Randbedingungen (also maximale Paketlänge und maximale Anzahl an RT Daten Frames) überprüft und ggf. eine weitere Anmeldung abgelehnt.

Der Ansatz führt einen neuen Ressourcen-Reservierungs-Mechanismus ein und vereinfacht die Vermittlung von Datenpaketen über das industrielle Ethernet durch Verwendung einer sogenannten "Daisy-Chain"-Topologie (d. h. die Vermittlungsknoten sind wie an einer "Kette" aufgereiht, in Bus oder Ring Topologie, siehe Figur 1 oder 2), welche weit verbreitet ist in industriellen Steuersystemen.

In anderen Topologien muss die maximale Anzahl von Stationen beschränkt werden, Sterntopologien und Meshed-Netze (also komplett vernetzte Topologien) können theoretisch verwendet werden, solange ein maximaler "Hop-Count", also die Anzahl der Stationen von Sender zu Empfänger, abhängig von der aktuell verwendeten Topologie, definiert werden kann. Solch ein Transport-Netz kann bestehend aus Vermittlungsstellen/Bridges und Endstationen modelliert werden, wobei die Bridges untereinander, wie beschrieben, über Trunk-Ports zu einem Transportnetz verbunden sind.

Mit den Endstationen (den Quellen und Senken der erzeugten Daten) sind die Vermittlungsstellen, Bridges über sogenannte "Edge-Ports" verbunden. Ein beispielhafter Aufbau wird in Figur 1 gezeigt.

Das beschriebene Schema ist topologie-unabhängig und erfordert weniger Konfigurations-Informationen im Vergleich zu reinen TDMA (oder ähnlichen) Systemen. Die Konfiguration basiert auf einem speziellen Modell für den herkömmlichen Reservierungsmechanismus / Stream Reservation für RT-Echtzeit-Datentransfer in einer vorkonfigurierten RT-Phase.

### DATA PLANE

Als erste Maßnahme zum Erreichen einer garantierten Latenz im Netz wird geplanter Datenverkehr analog in der IEEE 802.1 Qbv-2016 standardisiert übertragen. So wie bei Profinet IRT mit seinen roten und grünen Phasen, wird die Zykluszeit in zwei Phasen geteilt. Mit einem geschützten Zeitfenster wird gestartet, welches exklusiv reserviert ist für die Übertragung von Echtzeit-Daten (RT-Phase). Es wird jeweils gefolgt wird von einem ungeschützten Fenster für anderen Datentransfer.

Anders als bei Profinet IRT, dass eine explizite Konfiguration der gelben Phase benötigt, bietet der Datentransfer, der gemäß dem IEEE Standard eingeplant wird, eine implizierte "Schutz-Band"-Funktion in den Gate Operationen. Um die geplanten Zeit-Phasen aller Vermittlungsstellen/Bridges auf gemeinsame Start- und Ende-Zeiten auszugleichen, die die Grundlage für den zeitgeplanten Datentransfer sind, basierend beispielsweise auf IEEE 802.1AS-2011 oder einem anderen zeitsynchronisierten Protokoll wie IEEE 1588, ist es Voraussetzung, dass alle Netzelemente (Bridges und End-Stationen) zeitsynchronisiert sind.

Die End-Stationen müssen die zyklischen Echtzeit-Daten Streams am Anfang jedes Zyklus über die sog. "Edge" Eingangs-Ports in das Netz einspeisen und alle zu übertragenden Daten-Frames als Burst-Traffic übertragen. In jeder echtzeitfähigen Bridge werden die empfangenen Echtzeit-Datenpakete gepuffert und in die richtige Ausgangsqueue gepuffert, die dem geschützten Übertragungsfenster zugehörig ist und dann im Store&Forward Modus übertragen werden.

### KONFIGURATION

Im Gegensatz zu PROFINET IRT, dass vollständig offline und vorab geplant/engineered werden muss, übernimmt dieser Entwurf ein Konfigurations-Modell, das beide Ansätze kombiniert, die Offline Konfiguration und Zugriffskontrolle zur Laufzeit. Ein Vorteil des vorgeschlagenen Vorgehens ist der geringere Engineering-Aufwand und die angebotene Unterstützung von dynamischen Konfigurationen von Echtzeit-Datenströmen, verglichen zu anderen zeitbasieren Echtzeit-Lösungen wie PROFINET IRT.

Die Haupt-Konfigurationsaufgaben, die vorab offline ausgeführt werden müssen, sind vorrangig im Gebiet der Transport-Klassen (QoS - Quality of Service), inklusive Transportklassen-Parametern und dem Einrichten des geplanten Datentransfers.

Ein netzwerkweiter, konsistenter Prioritätswert muss als QoS Identifier definiert und von allen Echtzeit-Streams verwendet werden. Das Übertragen von diesem Prioritätswert auf eine Transport-Klasse (ausgehende Queue für Echtzeit-Übertragung) auf jeder einzelnen Bridge gehört in die Bridge-lokale Konfiguration. Um die zyklischen Schedules für die zeitgetaktete Datenübertragung aufzusetzen ist es erforderlich, eine Kontroll-Liste pro Port-Gate auf jeder Bridge zu konfigurieren, unter Verwendung der verwalteten Objekte, die in der IEEE 802.1 Qbr spezifiziert sind. Alle Bridges im Netzwerk müssen mit dem gleichen Zeitplan arbeiten.

Um eine automatische Netzwerk-Konfiguration auf Stream-Ebene zur Laufzeit zu realisieren, kann in einer vorteilhaften Ausführungsform das Prinzip des Stream Reservation Protocol (SRP), IEEE 802.1 Q 2014 verwendet werden. Es wurde als Plugand-Play Stream-Konfigurations-Mechanismus für AVB Systeme entwickelt.

Das Grundprinzip besteht darin, das Protokoll auf dem Netzwerk anzuwenden, um Zugangskontrolle durchzuführen, Latenzkontrolle, Bandbreiten- und Ressourcen-Reservierung eingeschlossen für jeden Daten-Stream, der auf dem Netzwerk übertragen werden muss.

### WORST-CASE LATENZ

Ein wesentlicher Aspekt des Stream-Reservierungs-Mechanismus ist die Möglichkeit zur Berechnung der Worst-Case Latenz-Zeit, welche abhängig ist von der maximalen Frame-Größe und der maximalen Anzahl von Sprüngen / Hops in diesem Entwurf.

Die Berechnung beruht auf dem synchronisierten Einspeisen von RT Daten-Frames durch die End-Stationen am Anfang der RT Phase und einen bekannten maximaler Netzwerk Durchmesser, der die Worst-Case Latenz eines einzelnen Frames im Netz definiert. Diesen ermöglicht eine vereinfachte Ressourcen-Planung innerhalb des Netzwerks.

RT Frames werden im Netzwerk in einem zeitgeplanten Übertragungsfenster gesendet, das für Echtzeit-Datenübertragung reserviert ist, was verhindern soll, dass anderer Datenverkehr die Übertragung beeinflusst. Die vorab bekannten Einspeise-Zeiten bieten die Möglichkeit zur Vereinfachung - alle Bridges werden mit demselben Startpunkt und der gleichen Größe des zeitlichen Übertragungsfensters konfiguriert.

Eine weitere Vereinfachung basiert auf der vorab bekannten maximalen PDU (Protocol Data Unit, Daten Frame) Größe der Echtzeit-Übertragung, die Einführung einer maximalen Größe der RT Klasse vereinfacht die Berechnung der Worst-Case Latenzzeit und ermöglicht ein neues vereinfachtes Modell für das SRP (Stream Reservation Protocol).

Garantierte maximale Latenz kann erreicht werden, wenn alle Echtzeit-Ströme des aktuellen Zyklus ihre Datenübertragung vor Ablauf des geschätzten Übertragungsfensters des aktuellen Übertragungs-Zyklus beenden, was in einer gebundenen max. Latenz resultiert (Bearbeitungsdauer, auch bezeichnet als "Make Span" für Kommunikation zwischen industriellen Kontroll-Geräten).

Dieses Prinzip hinter der Berechnung der Worst-Case-Latenz ist ähnlich dem Konzept, das in Stream Reservation für AVB Systeme verwendet wird mit CBSA (Credit based Shaper) zum Weiterleiten bei jeder Teilnetzstrecke, wobei die Latenz auf einer Teilnetzstrecke - nicht Ende-zu-Ende in diesem Ansatz - berechnet wird. Deshalb ermöglicht das beschriebene System im Vergleich zum AVB Netz niedrigere Latenzen. Ein AVB Netz kann interpretiert werden als eine einzelne AVB Bridge und das Reservierungsschema von Stream Reservation kann verwendet werden.

Das beschriebene System kombiniert ein vereinfachtes Scheduling-Konzept mit dynamischer Stream-Reservierung und Zugriffskontrolle. Der Vorteil besteht im reduzierten Aufwand für Engineering und gibt Unterstützung für eine dynamische Konfiguration von Echtzeit Streams. Das neue Schema ist topologie-unabhängig und erfordert nur sehr geringe Vorab-Berechnung des Zeit-Schedules, was zu vereinfachter Konfigurations-Information führt. Die Konfiguration des Schedule hängt ab von dem maximalen Hop-Count und Übertragungs-Zyklen im Netz und ist identisch für jede einzelne Bridge.

Alle Bridges erhalten die gleiche Konfiguration für den geplanten Datenverkehr während der Design- und Konfigurationsphase.

Alle End-Stationen übertragen ihre Daten in Burst am Anfang der Übertragungsphase, es ist keine framegranulare Koordination zwischen unterschiedlichen End-Stationen notwendig.

Für jedes Schedule-Fenster muss die Auswirkung vom Jitter der Zeit-Synchronisation und bei den Einspeisungs-Mechanismen nur einmal berücksichtigt werden.

In Folge dessen kann die Performanz des beschriebenen Systems besser sein als die von PN-IRT in Netzen mit höheren Verbindungsgeschwindigkeiten.

Der Aufwand für Konfigurationen wird zu einem Minimum reduziert und ermöglicht das dynamische Hinzufügen von Endstationen und Kommunikationsbeziehungen.

Das beschriebene System kann verwendet werden um starke Transportnetze zu bauen, die mit vorhandenen TSN-Mechanismen eine hohe Performanz leisten, indem sie eine einfache Netzkonfiguration verwenden und Überlast-Situationen zu vermeiden, sowie ein deterministisches Verhalten des Netzes zu garantieren.

Zur Erläuterung sind weitere Figuren beigefügt, es zeigen
Figur 3 die Übertragung von Streams in einem geschützten Fenster,
Figur 4 die Übertragung von Streams mit zusätzlichen Übertragungslücken zwischen den Datenpaketen,
Figur 5 Switching Delay bei Datenübertragung 802.1,
Figur 6 Switching Delay bei Datenübertragung mit Storing Delay,
Figur 7 mit sequentiellem Switching,
Figur 8 mit parallelem Switching und
Figur 9 ein Beispiel mit einer Ring-Topologie und einem max. Hop-Count <= 4.

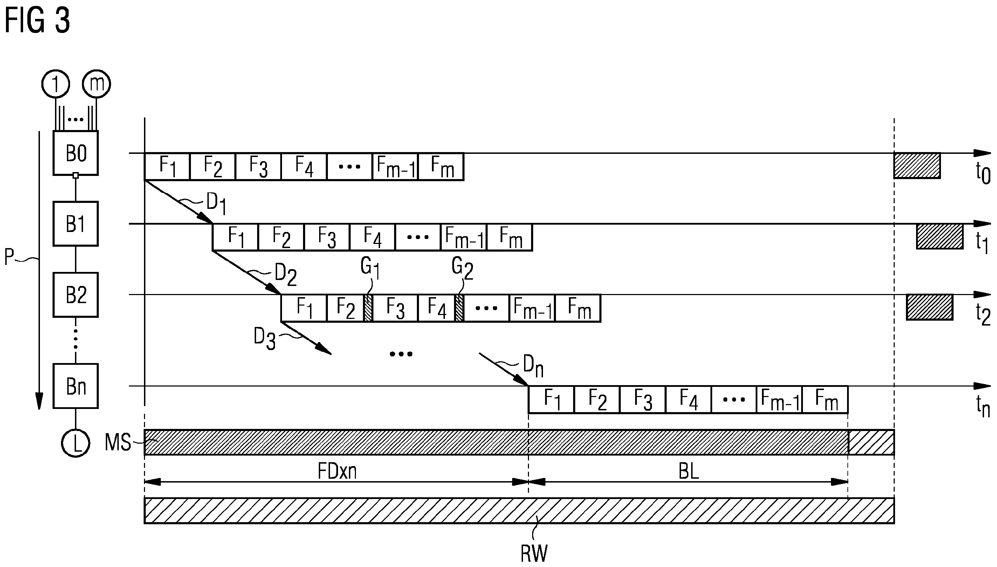

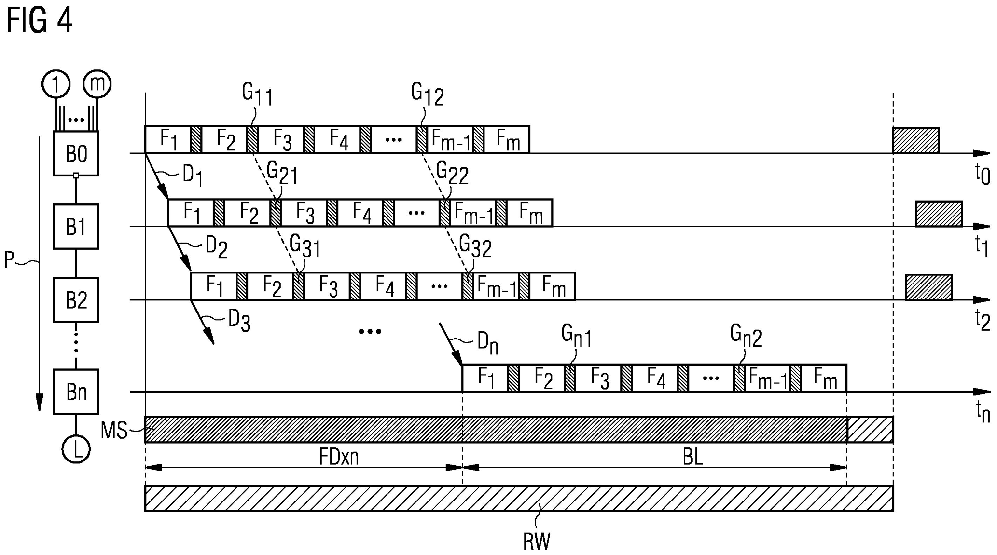

Die Figuren 3 und 4 zeigen eine beispielhafte Übertragung von Datenframes F1, F2, ... Fm auf seinen Stationen von den Sendern 1 ...m zum Empfänger L (auch Listener genannt). Die Übertragung geschieht über mehrere Sprünge B0, B1, ... Bn im Netz und erfolgt jeweils leicht Zeitverzögert (Forwarding Delay D1, D2, ... Dn). Es können während der Übertragung auch weitere Zeitlücken G1, G2 zwischen zwei Datenframes entstehen, welche auch in die Gesamtübertragungszeit MS des Datenstreams einberechnet werden. Die Gesamtübertragungszeit MS ist dabei kleiner als das für die Übertagung des Datenstreams reservierte Übertragungszeitfenster, RW. Es ist eine Zeitverzögerung erkennbar zwischen dem ersten Einspeisen der Datenpakete bei der ersten Vermittlungsstelle B0 und dem ersten Einspeisen der Datenpakete bei der letzten Bridge Bn, auch bezeichnet als Forwarding Delay FDxn.

Die Gesamt-Übertragungszeit MS setzt sich zusammen aus diesem Forwarding Delay FDxn + der Burstlength BL.

Figur 3 zeigt eine Ausführungsform mit der Weiterleitung von Paketen im Store&Forward Verfahren, d. h. der einzelne Frame wird zuerst komplett übertragen und erst nach dem vollständigen Empfang zur nächsten Station weitergeleitet. In Figur 4 wird als Alternative ein Cut-Through Verfahren gezeigt, wobei die Weiterleitung der Datenpakete bereits in die Wege geleitet wird, bevor sie vollständig übertragen wurden, hier ist der Forwarding Delay D1, ... Dn deutlich kleiner. Es werden Interframe Gaps G11, ... Gn2 zwischen den einzelnen Frames vorgesehen, um eine Kollisionsfreie Übertragung zu erhalten. Somit ist die Burst Length BL vermutlich größer, durch die vorhandenen Gaps, dafür ist der Forwarding Delay eher kleiner als bei dem ersten Beispiel.

Durch die Systemauslegung (Topologie mit Linie und Übertragung im Bündel) kann die maximal mögliche Anzahl an Streams allgemein bestimmt werden, siehe Figur 4.

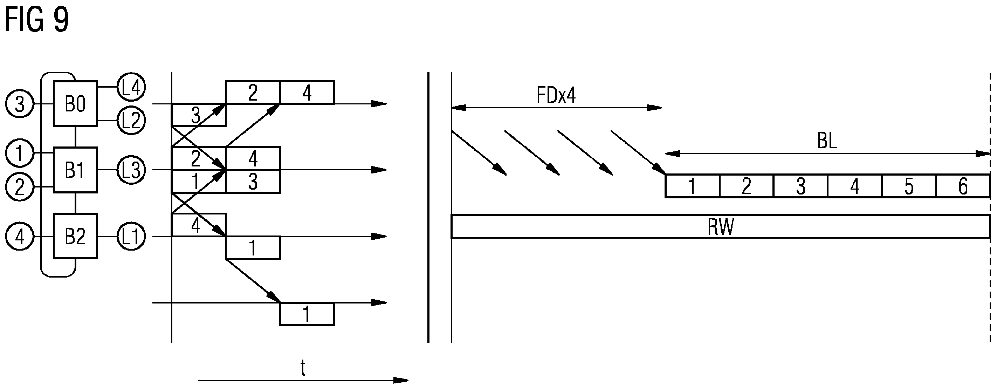

Im Betrieb, Figur 9, wird bei einer neuen Reservierung geprüft ob diese noch erlaubt ist, anhand der "Max. Burst Length" aus der Systemauslegung. In dem gezeigten Beispiel ist die Anzahl der maximalen Sprünge 4.

Das reale Netzwerk kann dabei weniger Hops besitzen und eine andere Topologie aufweisen. Die Sender und Empfänger können an beliebigen Stellen im Netzwerk angeschlossen werden.

Durch die Systemauslegung wird garantiert, dass die bestimmte maximale Anzahl an Streams (s. "Max. Burst Length") immer im Netzwerk übertragen werden kann, selbst in der Worst-Case Topologie mit Worst-Case Anordnung der Listener und Talker (Als "Bündel an Frames"). Es können auch später noch weitere Streams angemeldet werden. Bei dem dargestellten Beispiel gehen immer 6 Streams, es erfolgt dann keine Prüfung mehr anhand der aktuellen Netzwerk Topologie und der vom Stream benutzten Pfade.

Während des Betriebs erfolgt eine Überprüfung der noch verfügbaren Ressourcen, dieser Wert wurde unter Berücksichtigung der Worst-Case Topologie bereits während des Netzwerk-Designs bestimmt.

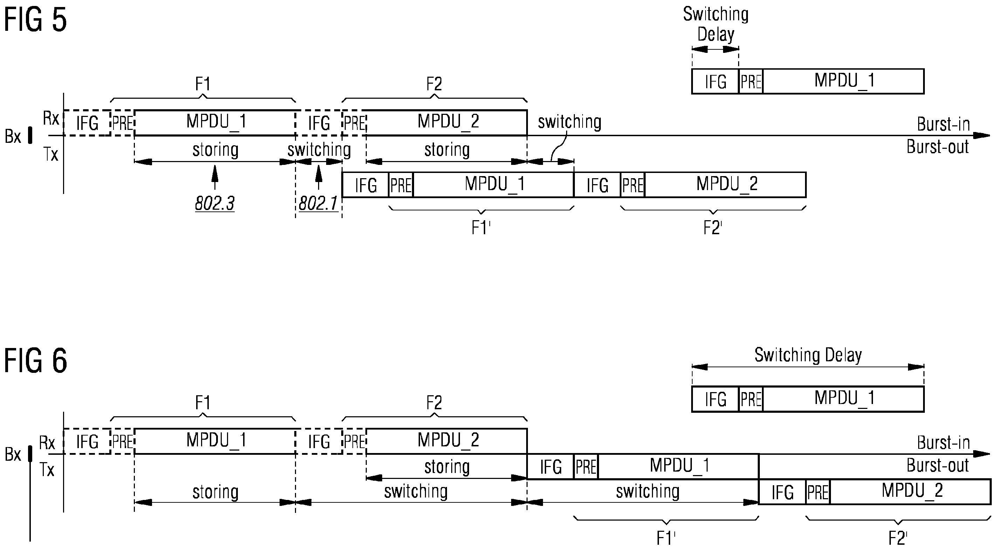

Die Figuren 5 bis 8 zeigen nun verschiedene Ausgestaltungsformen, was innerhalb einer Vermittlungsstelle Bx passiert, einerseits am Eingangsport Rx (Burst in) und am Ausgangsport Tx (Burst out).

Jeder Datenframe F1, F2 besteht aus einem Datenkopf, Header oder auch Präambel genannt, PRE, und dem Datenteil MPDU_1, MPDU_2. Zwischen den Datenpaketen befindet sich hier beispielhaft eine Lücke, IFG, auch Inter Frame Gap genannt. Figur 5 zeigt ein Beispiel wo bei Empfang von Daten der erste Frame F1 vollständig empfangen wird, (storing delay) allerdings wir dann bereits während des Empfangs eines zweiten Frames F2 eine entsprechende Weiterleitung des Datenbursts zumindest vom ersten Frame F1' über den Ausgangsport in die Wege geleitet.

Damit ist die Switching Delay Zeit kleiner als die Summe aus (IFG + PRE + MPDU) * bittime. Switching Delay ist nur die Zeit in der Übertragungslücke IFG. Übertragen werden die Datenpakete MPDU_1 und MPDU_2 am Stück.

Figur 6 zeigt ein Beispiel, wo die Switching Delay Zeit genau gleich die Summe aus (IFG + PRE + MPDU) * bittime ist. Hier wird die Übertragung jedes einzelnen Datenpakets quasi getrennt gepuffert.

Die Übertragungslücken in der Darstellung von Figur 6 entstehen, wenn eine Bridge nicht leistungsfähig genug ist und damit diese Lücken in der Übertragung erzeugt - also nicht ununterbrochen Frames übertragen kann. Diese entsteht bei der Übertragung, ist unerwünscht und muss aber bei der Systemauslegung berücksichtigt werden.

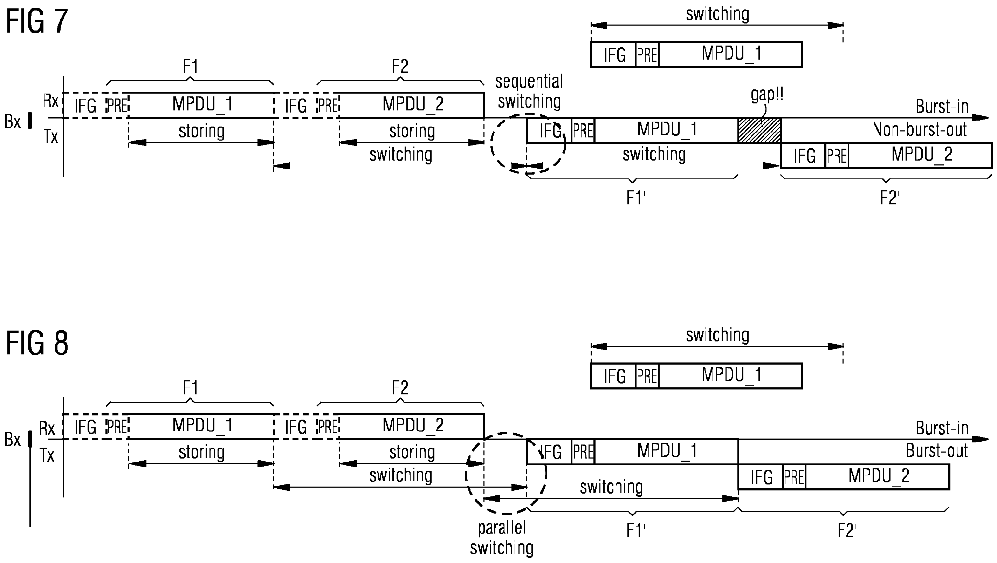

Bei dem in Figur 7 dargestellten Fall ist die Switching Delay Zeit größer als die Summe aus (IFG + PRE + MPDU) * bittime.

Hier haben wir eine Übertragungslücke gap im Ausgangsport. In diesem Fall wird sequentiell vermittelt, d. h. erst wird der erste Datenframe MPDU_1 bearbeitet, dann der zweite usw.

Analog wird dann in Figur 8 ein Fall mit parallelem Switching gezeigt, der gestrichelte Bereich zeigt, dass mit dem Switching für das zweite Datenpaket bereits begonnen wurde, bevor die Vermittlung vom ersten Datenpaket abgeschlossen war.

## Patentansprüche

1. Verfahren zum priorisierten, performanten, regelmäßigen Übertragen einer Menge von Datenpaketen (F1, F2, ... Fm) in einem industriellen Netzwerk (NB, NR) bestehend aus Vermittlungsknoten (B0, B1, B2, B3, ... Bn), wobei
die Menge von Datenpaketen (F1, F2, ... Fm) auf dem Weg von einem Datensender (1, ... m) zu einem Datenempfänger (L) von einem ersten Vermittlungsknoten (B0, B1, B2, B3) zu einem zweiten Vermittlungsknoten (B1, B2, B3, Bn) übertragen wird, und
für die Übertragung der Menge von Datenpaketen (F1, F2, ... Fm) von dem ersten Vermittlungsknoten zu dem zweiten Vermittlungsknoten bei allen übertragenden Vermittlungsknoten (B0, B1, B2, B3) im Netzwerk (NB, NR) ein Übertragungs-Zeitfenster (RW) von der Übertragungs-Bandbreite exklusiv reserviert ist, und
der Beginn des Übertragungs-Zeitfensters (RW) bei allen übertragenden Vermittlungsknoten (B0, B1, B2, B3) im Netzwerk (NB, NR) zeitsynchronisiert ist, und
vor Beginn der Übertragung eine Systemauslegung des industriellen Netzwerks (NB, NR) bekannt sein und geplant werden muss, wobei unter Berücksichtigung der aus der Netz-Topologie resultierenden Anzahl von zu durchlaufenden Vermittlungsknoten (B0, B1, B2, B3) die Reservierung des Übertragungs-Zeitfensters (RW) erfolgt,
so dass die Übertragung eines zur Menge von Datenpaketen (F1, F2, ... Fm) korrespondierenden Bursts mit einer damit assoziierten Burst Length, innerhalb des Übertragungs-Zeitfensters (RW) immer garantiert ist,
wobei
das für die Übertragung der Menge von Datenpaketen (F1, F2, ... Fm) reservierte Übertragungs-Zeitfenster (RW) größer ist als eine Gesamtübertragungszeit (MS) der Datenpakete (F1, F2, ... Fm), die sich zusammensetzt aus der Burst Length (BL) und einem Forwarding Delay (FDxn), wobei
das Forwarding Delay (FDxn) die Zeitverzögerung zwischen dem ersten Einspeisen des Bursts beim ersten Vermittlungsknoten (B0) und dem ersten Einspeisen des Bursts am letzten zu durchlaufenden Vermittlungsknoten (Bn) ist.

2. Verfahren gemäß Patentanspruch 1,
**dadurch gekennzeichnet, dass**
die zu übertragende Menge von Datenpaketen (F1, F2, ... Fm) mit einem Merker QoS versehen ist.

3. Verfahren nach einem der vorherigen Patentansprüche,
**dadurch gekennzeichnet, dass**
die Zeitsynchronisierung des Übertragungs-Zeitfensters (RW) im Netzwerk gemäß dem Standard TSN IEEE 802.1 AS-2011 durchgeführt wird.

4. Verfahren nach einem der vorherigen Patentansprüche,
**dadurch gekennzeichnet, dass**
die Reservierung der Übertragungs-Zeitfensters (RW) gemäß dem Standard Profinet IRT IEEE 802.1 Qbv durchgeführt wird.

5. Verfahren nach einem der vorherigen Patentansprüche,
**dadurch gekennzeichnet, dass**
für die Übertragung der Menge von Datenpaketen (F1, F2, ... Fm) in einem der Vermittlungsknoten (B0, B1, B2, B3) ein Store&Forward Verfahren angewendet wird, insbesondere das erste der zu übertragenden Datenpakete (F1) vollständig vom Vermittlungsknoten (B0, B1, B2, B3) empfangen wird, bevor es an den nachfolgenden Vermittlungsknoten (B0, B1, B2, B3) weitergesendet wird.

6. Verfahren nach einem der Patentansprüche 1 bis 5,
**dadurch gekennzeichnet, dass**
für die Übertragung der Menge von Datenpaketen (F1, F2, ... Fm) in einem der Vermittlungsknoten (B0, B1, B2, B3) ein Cut Through Verfahren angewendet wird, insbesondere das erste der zu übertragenden Datenpakete (F1) noch nicht vollständig vom Vermittlungsknoten (B0, B1, B2, B3) empfangen ist, bevor es an den nachfolgenden Vermittlungsknoten (B0, B1, B2, B3) weitergesendet wird.

7. Verfahren nach einem der vorherigen Patentansprüche,
**dadurch gekennzeichnet, dass**
in der Menge von Datenpaketen (F1, F2, ... Fm) für die Übertragung zwischen den Datenpaketen zur Vermeidung von Kollisionen zumindest eine Übertragungslücke (G1, ...) eingeplant ist.

8. Verfahren nach einem der vorherigen Patentansprüche,
**dadurch gekennzeichnet, dass**
die Übertragung der Datenpaketen (F1, F2, ... Fm) geeignet ist für Echtzeit-Anwendungen.

9. System umfassend mehrere Vermittlungsknoten (B0, B1, B2, B3) eingerichtet zur priorisierten, performanten Übertragung einer Menge von Datenpaketen (F1, F2, ... Fm) in einem industriellen Netzwerk (NB, NR) bestehend aus Vermittlungsknoten (B0, B1, B2, B3, ... Bn) wobei
die Menge von Datenpaketen (F1, F2, ... Fm) auf dem Weg von einem Datensender (1, ... m) zu einem Datenempfänger (L) von dem ersten Vermittlungsknoten (B0, B1, B2, B3) über einen Eingangsport (Rx) empfangen und einen Ausgangsport (Tx) zu einem zweiten Vermittlungsknoten (B1, B2, B3, ... Bn) übertragen wird, und
für die Übertragung der Menge von Datenpaketen (F1, F2, ... Fm) von dem Vermittlungsknoten zu einem zweiten Vermittlungsknoten ein Übertragungs-Zeitfenster (RW) von der Übertragungs-Bandbreite exklusiv reserviert ist und
mit einem zeitsynchronisierten Beginn des Übertragungs-Zeitfensters (RW) bei allen übertragenden Vermittlungsknoten (B0, B1, B2, B3) im Netzwerk (NB, NR), wobei
vor Beginn der Übertragung eine Systemauslegung des industriellen Netzwerks (NB, NR) bekannt sein und geplant werden muss, wobei unter Berücksichtigung der aus der Netz-Topologie resultierenden Anzahl von zu durchlaufenden Vermittlungsknoten (B0, B1, B2, B3) die Reservierung des Übertragungs-Zeitfensters (RW) erfolgt, so dass die Übertragung eines zur Menge von Datenpaketen (F1, F2, ... Fm) korrespondierenden Bursts mit einer damit assoziierten Burst Length innerhalb des Übertragungs-Zeitfensters (RW) immer garantiert ist, wobei
das für die Übertragung der Menge von Datenpaketen (F1, F2, ... Fm) reservierte Übertragungszeitfenster (RW) größer ist als eine Gesamtübertragungszeit (MS) der Datenpakete (F1, F2, ... Fm), die sich zusammensetzt aus der Burst Length (BL) und einem Forwarding Delay (FDxn), wobei
das Forwarding Delay (FDxn) die Zeitverzögerung zwischen dem ersten Einspeisen des Bursts beim ersten Vermittlungsknoten (B0) und dem ersten Einspeisen des Bursts am letzten zu durchlaufenden Vermittlungsknoten (Bn) ist.

10. System umfassend mehrere Vermittlungsknoten (B0, B1, B2, B3) gemäß Patentanspruch 9, wobei
die zu übertragende Menge von Datenpaketen (F1, F2, ... Fm) mit einem Merker QoS versehen ist.

11. System umfassend mehrere Vermittlungsknoten (B0, B1, B2, B3) nach einem der Patentansprüche 9 oder 10,
**dadurch gekennzeichnet, dass**
die Zeitsynchronisierung des Übertragungs-Zeitfensters (RW) im Netzwerk gemäß dem Standard TSN IEEE 802.1 AS-2011 durchgeführt wird.

12. System umfassend mehrere Vermittlungsknoten (B0, B1, B2, B3) nach einem der Patentansprüche 9 bis 11,
**dadurch gekennzeichnet, dass**
die Reservierung der Übertragungs-Zeitfensters (RW) gemäß dem Standard Profinet IRT IEEE 802.1 Qbv durchgeführt wird.

13. System umfassend mehrere Vermittlungsknoten (B0, B1, B2, B3) nach einem der Patentansprüche 9 bis 12,
**dadurch gekennzeichnet, dass**
für die Übertragung der Menge von Datenpaketen (F1, F2, ... Fm) in dem Vermittlungsknoten (B0, B1, B2, B3) ein Store&Forward Verfahren angewendet wird, insbesondere das erste der zu übertragenden Datenpakete (F1) über den Eingangsport (Rx) vollständig vom Vermittlungsknoten (B0, B1, B2, B3) empfangen wird, bevor es über den Ausgangsport (Tx) an den nachfolgenden Vermittlungsknoten (B0, B1, B2, B3) weitergesendet wird.

14. System umfassend mehrere Vermittlungsknoten (B0, B1, B2, B3) nach einem der Patentansprüche 9 bis 12,
**dadurch gekennzeichnet, dass**
für die Übertragung der Menge von Datenpaketen (F1, F2, ... Fm) in dem Vermittlungsknoten (B0, B1, B2, B3) ein Cut Through Verfahren angewendet wird, insbesondere das erste der zu übertragenden Datenpakete (F1) über den Eingangsport (Rx) noch nicht vollständig vom Vermittlungsknoten (B0, B1, B2, B3) empfangen ist, bevor es über den Ausgangsport (Tx) an den nachfolgenden Vermittlungsknoten (B0, B1, B2, B3) weitergesendet wird.

15. System umfassend mehrere Vermittlungsknoten (B0, B1, B2, B3) nach einem der Patentansprüche 9 bis 14,
**dadurch gekennzeichnet, dass**
in der Menge von Datenpaketen (F1, F2, ... Fm) für die Übertragung zwischen den Datenpaketen (F1, F2, ... Fm) zumindest eine Übertragungslücke (G1, ...) eingeplant ist.

16. System umfassend mehrere Vermittlungsknoten (B0, B1, B2, B3) nach einem der Patentansprüche 9 bis 15,
**dadurch gekennzeichnet, dass**
die Übertragung der Datenpaketen (F1, F2, ... Fm) geeignet ist für Echtzeit-Anwendungen.

## Claims

1. Method for the prioritized, high-performance, regular transmission of a set of data packets (F1, F2, ... Fm) in an industrial network (NB, NR) consisting of switching nodes (B0, B1, B2, B3, **...** Bn), wherein
the set of data packets (F1, F2, **...** Fm), on the way from a data transmitter (1, ... m) to a data receiver (L), is transmitted from a first switching node (B0, B1, B2, B3) to a second switching node (B1, B2, B3, Bn), and
a transmission time window (RW) of the transmission bandwidth is exclusively reserved for transmitting the set of data packets (F1, F2, **...** Fm) from the first switching node to the second switching node for all transmitting switching nodes (B0, B1, B2, B3) in the network (NB, NR), and
the start of the transmission time window (RW) is time-synchronized for all transmitting switching nodes (B0, B1, B2, B3) in the network (NB, NR), and
prior to the start of the transmission, a system design of the industrial network (NB, NR) must be known and planned, wherein the transmission time window (RW) is reserved taking into account the number of switching nodes (B0, B1, B2, B3) to be passed through that results from the network topology,
with the result that the transmission of a burst corresponding to the set of data packets (F1, F2, **...** Fm) and with an associated burst length is always guaranteed within the transmission time window (RW),
wherein
the transmission time window (RW) reserved for transmitting the set of data packets (F1, F2, ... Fm) is greater than a total transmission time (MS) of the data packets (F1, F2, ... Fm) that is composed of the burst length (BL) and a forwarding delay (FDxn), wherein
the forwarding delay (FDxn) is the time delay between the first injection of the burst at the first switching node (B0) and the first injection of the burst at the last switching node (Bn) to be passed through.

2. Method according to Patent Claim 1,
**characterized in that**
the set of data packets (F1, F2, ... Fm) to be transmitted is provided with a QoS flag.

3. Method according to one of the preceding patent claims,
**characterized in that**
the time synchronization of the transmission time window (RW) in the network is carried out according to the TSN IEEE 802.1 AS-2011 standard.

4. Method according to one of the preceding patent claims,
**characterized in that**
the transmission time window (RW) is reserved in accordance with the Profinet IRT IEEE 802.1 Qbv standard.

5. Method according to one of the preceding patent claims,
**characterized in that**
a store & forward method is used to transmit the set of data packets (F1, F2, ... Fm) in one of the switching nodes (B0, B1, B2, B3), in particular the first of the data packets (F1) to be transmitted is received completely by the switching node (B0, B1, B2, B3) before it is forwarded to the subsequent switching node (B0, B1, B2, B3).

6. Method according to one of Patent Claims 1 to 5,
**characterized in that**
a cut-through method is used to transmit the set of data packets (F1, F2, **...** Fm) in one of the switching nodes (B0, B1, B2, B3), in particular the first of the data packets (F1) to be transmitted has not yet been completely received by the switching node (B0, B1, B2, B3) before it is forwarded to the subsequent switching node (B0, B1, B2, B3).

7. Method according to one of the preceding patent claims,
**characterized in that**
at least one transmission gap (G1, ...) is planned in the set of data packets (F1, F2, **...** Fm) for the transmission between the data packets in order to avoid collisions.

8. Method according to one of the preceding patent claims,
**characterized in that**
the transmission of the data packets (F1, F2, **...** Fm) is suitable for real-time applications.

9. System comprising a plurality of switching nodes (B0, B1, B2, B3) configured for the prioritized, high-performance transmission of a set of data packets (F1, F2, ... Fm) in an industrial network (NB, NR) consisting of switching nodes (B0, B1, B2, B3, **...** Bn), wherein
the set of data packets (F1, F2, **...** Fm), on the way from a data transmitter (1, ... m) to a data receiver (L), is received by the first switching node (B0, B1, B2, B3) via an input port (Rx) and is transmitted to a second switching node (B1, B2, B3, **...** Bn) via an output port (Tx), and
a transmission time window (RW) of the transmission bandwidth is exclusively reserved for transmitting the set of data packets (F1, F2, **...** Fm) from the switching node to a second switching node, and
with a time-synchronized start of the transmission time window (RW) for all transmitting switching nodes (B0, B1, B2, B3) in the network (NB, NR), wherein
prior to the start of the transmission, a system design of the industrial network (NB, NR) must be known and planned, wherein the transmission time window (RW) is reserved taking into account the number of switching nodes (B0, B1, B2, B3) to be passed through that results from the network topology, with the result that the transmission of a burst corresponding to the set of data packets (F1, F2, ... Fm) and with an associated burst length is always guaranteed within the transmission time window (RW), wherein
the transmission time window (RW) reserved for transmitting the set of data packets (F1, F2, ... Fm) is greater than a total transmission time (MS) of the data packets (F1, F2, ... Fm) that is composed of the burst length (BL) and a forwarding delay (FDxn), wherein
the forwarding delay (FDxn) is the time delay between the first injection of the burst at the first switching node (B0) and the first injection of the burst at the last switching node (Bn) to be passed through.

10. System comprising a plurality of switching nodes (B0, B1, B2, B3) according to Patent Claim 9, wherein
the set of data packets (F1, F2, ... Fm) to be transmitted is provided with a QoS flag.

11. System comprising a plurality of switching nodes (B0, B1, B2, B3) according to either of Patent Claims 9 and 10,
**characterized in that**
the time synchronization of the transmission time window (RW) in the network is carried out according to the TSN IEEE 802.1 AS-2011 standard.

12. System comprising a plurality of switching nodes (B0, B1, B2, B3) according to one of Patent Claims 9 to 11,
**characterized in that**
the transmission time window (RW) is reserved in accordance with the Profinet IRT IEEE 802.1 Qbv standard.

13. System comprising a plurality of switching nodes (B0, B1, B2, B3) according to one of Patent Claims 9 to 12,
**characterized in that**
a store & forward method is used to transmit the set of data packets (F1, F2, ... Fm) in the switching node (B0, B1, B2, B3), in particular the first of the data packets (F1) to be transmitted is received completely by the switching node (B0, B1, B2, B3) via the input port (Rx) before it is forwarded to the subsequent switching node (B0, B1, B2, B3) via the output port (Tx).

14. System comprising a plurality of switching nodes (B0, B1, B2, B3) according to one of Patent Claims 9 to 12,
**characterized in that**
a cut-through method is used to transmit the set of data packets (F1, F2, ... Fm) in the switching node (B0, B1, B2, B3), in particular the first of the data packets (F1) to be transmitted has not yet been completely received by the switching node (B0, B1, B2, B3) via the input port (Rx) before it is forwarded to the subsequent switching node (B0, B1, B2, B3) via the output port (Tx).

15. System comprising a plurality of switching nodes (B0, B1, B2, B3) according to one of Patent Claims 9 to 14,
**characterized in that**
at least one transmission gap (G1, ...) is planned in the set of data packets (F1, F2, ... Fm) for the transmission between the data packets (F1, F2, ... Fm).

16. System comprising a plurality of switching nodes (B0, B1, B2, B3) according to one of Patent Claims 9 to 15,
**characterized in that**
the transmission of the data packets (F1, F2, ... Fm) is suitable for real-time applications.

## Revendications

1. Procédé destiné à la transmission régulière, performante, priorisée d'une quantité de paquets de données (F1, F2, **...** Fm) dans un réseau industriel (NB, NR) se composant de nœuds de commutation (B0, B1, B2, B3, **...** Bn), dans lequel
la quantité de paquets de données (F1, F2, **...** Fm) est transmise sur le chemin depuis un expéditeur de données (1, ... m) vers un récepteur de données (L) depuis un premier nœud de commutation (B0, B1, B2, B3) vers un deuxième nœud de commutation (B1, B2, B3, Bn), et
pour la transmission de la quantité de paquets de données (F1, F2, **...** Fm) depuis le premier nœud de commutation vers le deuxième nœud de commutation lorsque tous les nœuds de commutation (B0, B1, B2, B3) transmettent, une fenêtre temporelle de transmission (RW) dans le réseau (NB, NR) est réservée exclusivement par la bande passante de transmission, et
le début de la fenêtre temporelle de transmission (RW) est synchronisé temporellement dans le réseau (NB, NR) lorsque tous les nœuds de commutation (B0, B1, B2, B3) transmettent, et
avant le début de la transmission une configuration système du réseau industriel (Nb, NR) doit être connue et planifiée, dans lequel en prenant en compte le nombre résultant de la topologie de réseau de nœuds de commutation (B0, B1, B2, B3) à traverser la réservation de la fenêtre temporelle de transmission (RW) est effectuée, de sorte que la transmission d'une salve correspondant à la quantité de paquets de données (F1, F2, Fm) est toujours garantie avec une longueur de salve associée à celle-ci, au sein de la fenêtre temporelle de transmission (RW), dans lequel
la fenêtre temporelle de transmission (RW) réservée pour la transmission de la quantité de paquets de données (F1, F2, **...** Fm) est plus grande qu'un temps de transmission global (MS) des paquets de données (F1, F2, ... Fm) qui s'assemble à partir de la longueur de salve (BL) et d'un délai de transmission (FDxn), dans lequel
le délai de transmission (FDxn) est le décalage temporel entre la première alimentation de la salve lors du premier nœud de commutation (B0) et la première alimentation de la salve au plus tard au niveau de nœuds de commutation (Bn) à traverser.

2. Procédé selon la revendication 1,
**caractérisé en ce que**
la quantité de paquets de données (F1, F2, ... Fm) à transmettre est dotée d'un drapeau QoS.

3. Procédé selon l'une quelconque des revendications précédentes, **caractérisé en ce que**
la synchronisation temporelle de la fenêtre temporelle de transmission (RW) dans le réseau est mise en œuvre selon la norme TSN IEEE 802.1 AS-2011.

4. Procédé selon l'une quelconque des revendications précédentes, **caractérisé en ce que**
la réservation de la fenêtre temporelle de transmission (RW) est mise en œuvre selon la norme Profinet IRT IEEE 802.1 Qbv.

5. Procédé selon l'une quelconque des revendications précédentes, **caractérisé en ce que**
pour la transmission de la quantité de paquets de données (F1, F2, ... Fm) un procédé de stockage et retransmission est appliqué dans un des nœuds de commutation (B0, B1, B2, B3), en particulier le premier des paquets de données (F1) à transmettre est reçu en totalité par le nœud de commutation (B0, B1, B2, B3) avant d'être transféré vers les nœuds de commutation (B0, B1, B2, B3) suivants.

6. Procédé selon l'une quelconque des revendications 1 à 5, **caractérisé en ce que**
pour la transmission de la quantité de paquets de données (F1, F2, **...** Fm) dans un des nœuds de commutation (B0, B1, B2, B3) un procédé de découpe est appliqué, en particulier le premier des paquets de données (F1) à transmettre n'est pas encore reçu en totalité par le nœud de commutation (B0, B1, B2, B3) avant d'être transféré vers les nœuds de commutation (B0, B1, B2, B3) suivants.

7. Procédé selon l'une quelconque des revendications précédentes, **caractérisé en ce que**
dans la quantité de paquets de données (F1, F2, ... Fm) pour la transmission entre les paquets de données pour éviter des collisions au moins une lacune de transmission (G1, ...) est planifiée.

8. Procédé selon l'une quelconque des revendications précédentes, **caractérisé en ce que**
la transmission des paquets de données (F1, F2, ... Fm) est adéquate pour des applications en temps réel.

9. Système comprenant plusieurs nœuds de commutation (B0, B1, B2, B3) établis pour une transmission performante priorisée d'une quantité de paquets de données (F1, F2, **...** Fm) dans un réseau industriel (NB, NR) se composant de nœuds de commutation (B0, B1, B2, B3, **...** Bn) dans lequel
la quantité de paquets de données (F1, F2, **...** Fm) est reçue sur le chemin depuis un expéditeur de données (1, ... m) vers un récepteur de données (L) par le premier nœud de commutation (B0, B1, B2, B3) par le biais d'un port d'entrée (Rx) et un port de sortie (Tx) est transmis à un deuxième nœud de commutation (B1, B2, B3, ... Bn), et
pour la transmission de la quantité de paquets de données (F1, F2, **...** Fm) depuis le nœud de commutation vers un deuxième nœud de commutation une fenêtre temporelle de transmission (RW) est réservée exclusivement par la bande passante de transmission et avec un début synchronisé dans le temps de la fenêtre temporelle de transmission (RW) lorsque tous les nœuds de commutation (B0, B1, B2, B3) transmettent dans le réseau (NB, NR), dans lequel
avant le début de la transmission une conception système du réseau industriel (NB, NR) doit être connue et planifiée, dans lequel en prenant en compte le nombre de nœuds de commutation (B0, B1, B2, B3) à traverser résultant de la topologie de réseau la réservation de la fenêtre de transmission (RW) est effectuée de sorte que la transmission d'une salve correspondant à la quantité de paquets de données (F1, F2, **...** Fm) avec une longueur de salve associée à celle-ci au sein de la fenêtre de transmission (RW) est toujours garantie, dans lequel
la fenêtre temporelle de transmission (RW) réservée pour la transmission de la quantité de paquets de données (F1, F2, **...** Fm) est plus grande qu'un temps de transmission global (MS) des paquets de données (F1, F2, **...** Fm) qui s'assemble à partir de la longueur de salve (BL) et d'un délai de transmission (FDxn), dans lequel
le délai de transmission (FDxn) est le décalage temporel entre la première alimentation de la salve lors du premier nœud de commutation (B0) et la première alimentation de la salve au plus tard au niveau de nœuds de commutation (Bn) traversants.

10. Système comprenant plusieurs nœuds de commutation (B0, B1, B2, B3) selon la revendication 9, dans lequel
la quantité de paquets de données (F1, F2, **...** Fm) à transmettre est dotée d'un drapeau QoS.

11. Système comprenant plusieurs nœuds de commutation (B0, B1, B2, B3) selon l'une quelconque des revendications 9 ou 10,
**caractérisé en ce que**
la synchronisation temporelle de la fenêtre temporelle de transmission (RW) est mise en œuvre dans le réseau selon la norme TSN IEEE 802.1 AS-2011.

12. Système comprenant plusieurs nœuds de commutation (B0, B1, B2, B3) selon l'une quelconque des revendications 9 à 11
**caractérisé en ce que**
la réservation de la fenêtre temporelle de transmission (RW) est mise en œuvre selon la norme Profinet IRT IEEE 802.1 Qbv.

13. Système comprenant plusieurs nœuds de commutation (B0, B1, B2, B3) selon l'une quelconque des revendications 9 à 12,
**caractérisé en ce que**
pour la transmission de la quantité de paquets de données (F1, F2, **...** Fm) un procédé de stockage et retransmission est appliqué dans le nœud de commutation (B0, B1, B2, B3), en particulier le premier des paquets de données à transmettre (F1) est reçu en totalité par le nœud de commutation (B0, B1, B2, B3) avant d'être transféré vers les nœuds de commutation (B0, B1, B2, B3) suivants par le biais du port de sortie (Tx).

14. Système comprenant plusieurs nœuds de commutation (B0, B1, B2, B3) selon l'une quelconque des revendications 9 à 12,
**caractérisé en ce que**
pour la transmission de la quantité de paquets de données (F1, F2, **...** Fm) dans le nœud de commutation (B0, B1, B2, B3) un procédé de découpe est appliqué, en particulier le premier des paquets de données (F1) à transmettre n'est pas encore reçu en totalité par le nœud de commutation (B0, B1, B2, B3) par le biais du port d'entrée (Rx) avant d'être transféré vers les nœuds de commutation (B0, B1, B2, B3) suivants par le biais du port de sortie (Tx).

15. Système comprenant plusieurs nœuds de commutation (B0, B1, B2, B3) selon l'une quelconque des revendications 9 à 14,
**caractérisé en ce que**
dans la quantité de paquets de données (F1, F2, ... Fm) au moins une lacune de transmission (G1, ...) est planifiée pour la transmission entre les paquets de données (F1, F2, ... Fm).

16. Système comprenant plusieurs nœuds de commutation (B0, B1, B2, B3) selon l'une quelconque des revendications 9 à 15,
**caractérisé en ce que**
la transmission des paquets de données (F1, F2, ... Fm) est adéquate pour des applications en temps réel.
